# FASCICULE DE BREVET EUROPEEN

(11) **EP 1 488 696 B1**
(45) Date de publication et mention de la délivrance du brevet: **13.10.2010**
(21) Numéro de dépôt: 04102643.6
(22) Date de dépôt: 10.06.2004
(51) Int. Cl.: A01K 61/00, A01K 63/00

(54) **Support pour l'aquaculture par bouturage d'animaux aquatiques**
Aquakulturzuchteinheit
Support for propagating of aquatic animals

(30) Priorité: 20.06.2003 FR 0307440
(43) Date de publication de la demande: 22.12.2004
(73) Titulaire: AMBLARD SA, 81200 Mazamet (FR)
(72) Inventeur: AMBLARD, Frédéric, 81200, MAZAMET (FR)
(74) Mandataire: Kohn, Philippe

(56) Documents cités:
- DE-C1- 10 161 174
- US-A- 1 865 564
- US-A- 3 465 718

## Description

L'invention concerne un support pour l'aquaculture par bouturage d'animaux aquatiques « à racines », notamment destinés aux aquariums, et une installation comportant un tel support.

Un support est connu du document US 1865564.

De nombreuses espèces d'animaux aquatiques vivants font l'objet d'un commerce international le plus souvent destiné à procurer des spécimens pour des aquariums.

De tels animaux aquatiques appartiennent par exemple à l'embranchement des cnidaires, comme les coraux, ou encore à l'embranchement des spongiaires, comme les éponges.

C'est une des raisons pour lesquelles, il est fréquent que soient prélevées dans le milieu naturel tout ou partie d'un animal adulte telle que les branches dans le cas des coraux, et cela malgré les conséquences écologiques qu'engendrent de tels prélèvements.

Ainsi, les fonds marins et notamment coralliens subissent d'importants prélèvements pouvant aller jusqu'à mettre en péril non seulement l'espèce surabondamment prélevée mais aussi l'écosystème dont elle fait partie.

D'autres utilisations, telles que la production de souvenirs à partir de certains de ces animaux, ne font qu'accroître encore la demande et donc de tels prélèvements.

Afin de réduire les prélèvements d'animaux aquatiques dans le milieu naturel et pour le protéger, il est souhaitable de développer l'aquaculture de certaines de ces espèces.

Pour ces espèces, l'aquaculture fait notamment appel à la technique du bouturage ou de la fragmentation, c'est-à-dire à la multiplication artificielle des animaux à partir de boutures. Une bouture est généralement constituée par un fragment détaché d'un animal « mère » qui va ensuite se développer jusqu'à devenir un animal présentant les mêmes caractéristiques que l'animal « mère ».

Le fragment formant la bouture présente généralement une taille de l'ordre de quelques centimètres ce qui est négligeable pour un animal « mère » de sorte que son développement ne s'en trouve pas affecté.

On connaît déjà de nombreuses installations d'aquaculture utilisant le bouturage, mais qui ne donnent pas entière satisfaction.

En effet, les boutures des animaux aquatiques sont par exemple attachées à des supports de type filaire, mais il faut ensuite que les animaux ainsi obtenus après croissance de la bouture soient détachés, parfois arrachés, afin de permettre notamment leur commercialisation.

Les animaux sont alors fragilisés et risquent d'être blessés tant lors de la séparation d'avec le support, qu'ultérieurement durant le conditionnement ou le transport pour les acheminer jusqu'à des intermédiaires ou à un destinataire final pour être vendus.

Dans le but de résoudre ces problèmes, l'invention propose un support pour l'aquaculture par bouturage d'animaux aquatiques, notamment destinés aux aquariums tels que des cnidaires ou des spongiaires, caractérisé en ce qu'il comporte une tête supérieure, destinée à recevoir au moins une bouture, et un tronc inférieur permettant la fixation du support, notamment dans une installation de culture, en variante dans un conteneur de transport, et en ce que le tronc est séparable de la tête pour que cette dernière constitue ultérieurement un socle de présentation de l'animal cultivé.

Grâce à l'invention, les animaux aquatiques issus des boutures sont préservés des risques de blessures et peuvent être ensuite transportés et commercialisés directement avec le socle de présentation formé par la tête du support de culture.

Avantageusement, on ne prélève dans le milieu aquatique naturel que quelques boutures sur des spécimens de l'espèce qui sont cultivés de manière à créer par bouturage successifs une colonie souche suffisamment importante pour fournir ensuite les boutures nécessaires à l'aquaculture.

De préférence, la tête formant le socle de présentation comporte une pluralité de cavités ou de sillons dans lesquelles sont bouturés des animaux d'espèces différentes susceptibles de cohabiter et de se développer.

Selon d'autres caractéristiques de l'invention :
- au moins la tête supérieure formant un socle de présentation est réalisée en un matériau analogue à du minéral ;
- la face supérieure de la tête comporte au moins une cavité destinée à recevoir au moins une bouture de l'animal ;
- la bouture est fixée dans la cavité de la tête par des moyens de fixation, par collage notamment par de la colle époxy, du cyanoacrylate ou du ciment à prise rapide ;
- au moins la tête est réalisée par moulage à partir d'un mélange d'un ou plusieurs composants minéraux parmi le ciment, le sable, le carbonate de calcium, l'hydroxyde de calcium, la pouzzolane, la roche naturelle et la pierre ponce ;
- le support comporte des moyens de liaison intervenant entre la tête supérieure et le tronc inférieur pour permettre leur assemblage ;
- la tête comporte dans sa face inférieure un logement, notamment destiné à recevoir l'extrémité supérieure du tronc inférieur ;
- le tronc inférieur comporte une collerette radiale comportant une face supérieure de butée qui coopère après assemblage avec la face inférieure de la tête ;
- la tête a globalement une forme de disque dont la face inférieure horizontale à partir de laquelle le tronc s'étend centralement vers le bas, constitue la face inférieure ultérieure du socle ;
- le support comporte une zone de moindre résistance mécanique au raccordement de l'extrémité supérieure du tronc avec la tête ;
- il comporte une amorce de rupture au raccordement de l'extrémité supérieure du tronc avec la tête ;
- le tronc est réalisé par moulage en une seule pièce à partir d'un mélange analogue, mais de densité et de composition différentes, de manière à faciliter la séparation ultérieure du tronc et de la tête.

L'invention propose aussi une installation d'aquaculture par bouturage d'animaux aquatiques, notamment destinés aux aquariums tels que des cnidaires ou des spongiaires, du type comportant au moins un support selon l'une quelconque des caractéristiques précédentes, caractérisé en ce qu'elle comporte au moins un plateau globalement horizontal qui comporte au moins un logement destiné à recevoir un tronc d'un support.

Selon d'autres caractéristiques de l'installation :
- le plateau horizontal comprend un cadre et un grillage dont chaque maille constitue un logement pour un tronc d'un support ;
- le tronc inférieur du support est solidaire du plateau horizontal ;
- le plateau horizontal comporte des pieds de manière à constituer une table de culture ;
- les pieds du plateau comportent des moyens d'ancrage de la table de culture sur un fond, tel qu'un fond marin ;
- le plateau constitue un plateau de transport des animaux aquatiques cultivés.

Grâce à son tronc qui peut constituer une partie de préhension, le support est facilement et rapidement mis en place sur le plateau de culture de l'installation duquel il est alors solidaire.

Avantageusement, le plateau horizontal comportant les logements dans lesquels sont reçus les troncs des supports constitue aussi un plateau de transport qui peut être intégré dans un conteneur prévu à cet effet, notamment en vue de leur exportation.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en perspective illustrant un animal aquatique issu d'une colonie mère dont on prélève une bouture sous la forme d'un fragment afin de procéder au bouturage ;
- la figure 2 est une vue en coupe axiale qui illustre un premier exemple de réalisation d'un support de culture selon l'invention avant la fixation de la bouture dans la cavité ;
- la figure 3 est une vue schématique en perspective d'une installation d'aquaculture selon l'invention qui d'une part illustre un support comportant la bouture avant l'introduction axiale du tronc inférieur dans un logement complémentaire du plateau horizontal d'une table de culture, et d'autre part, des supports dont les troncs ont été introduits dans les logements qui illustrent de la gauche vers la droite des animaux aquatiques à différentes étapes de croissance à partir de la bouture jusqu'à l'obtention d'un animal « mère » en fin de culture ;
- la figure 4 est une vue schématique en perspective d'un aquarium comportant sur son fond un rocher d'ornementation dans un trou duquel sont reçus un socle de présentation et son animal aquatique après séparation de la tête et du tronc inférieur du support selon l'invention ;
- la figure 5 est une vue schématique partielle en perspective d'une installation d'aquaculture et qui illustre en éclaté un deuxième exemple de réalisation d'un support de culture selon l'invention avant fixation de la bouture dans la cavité;
- la figure 6 est une vue partielle en coupe axiale d'une installation d'aquaculture selon la figure 5 dans un logement de laquelle est introduit le tronc inférieur d'un support selon le deuxième exemple de réalisation;
- la figure 7 est une vue schématique partielle en perspective analogue à la figure 5 qui illustre une variante du deuxième exemple de réalisation.

Dans la description qui va suivre, des chiffres de référence identiques désignent des éléments identiques ou ayant des fonctions similaires.

Afin de pouvoir procéder au bouturage des animaux aquatiques, il est nécessaire de prélever sur un animal dit « mère » un ou des fragments qui vont former les boutures nécessaires à l'aquaculture.

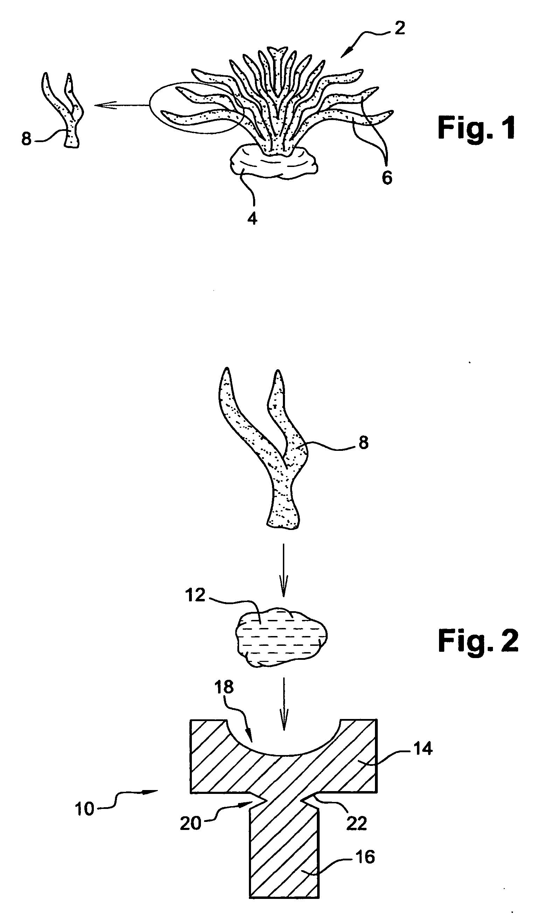

La figure 1 représente un animal 2 aquatique « mère », ici un corail, qui est solidaire d'une roche 4 d'un fond marin et comporte des branches 6.

De préférence, l'animal aquatique 2 est issu d'une colonie souche ayant préalablement été cultivée et obtenue par des bouturages successifs, et ceci afin de limiter les prélèvements dans le milieu naturel et de fournir ultérieurement toutes les boutures nécessaires à la mise en place de l'aquaculture.

A cet effet, pour obtenir une bouture 8, on prélève un fragment d'une extrémité d'une branche 6, puis on fixe la bouture 8 sur un support 10 du type de celui représenté à la figure 2 conformément au premier mode de réalisation de l'invention.

La bouture 8 est fixée sur le support 10 par tout moyen de fixation 12 approprié tel que le collage, notamment par de la colle époxy, du cyanoacrylate ou encore du ciment à prise rapide.

Le support 10 d'aquaculture comporte une tête supérieure 14 et un tronc inférieur 16 permettant la fixation du support 10.

La tête 14 est destinée à recevoir la bouture 8 et comporte à cet effet une cavité 18 ouverte sur sa face supérieure.

La forme et le nombre de cavités 18 que comporte la tête 14 peuvent varier. En effet, la forme de la cavité 18 est notamment fonction du type d'animal bouturé et des moyens de fixation 12.

En coupe axiale, la cavité 18 est ici de section globalement circulaire, en variante rectangulaire et pouvant s'étendre sur tout ou partie de la largeur de la tête 14 de manière à former par exemple un sillon.

Le tronc 16 est globalement de forme cylindrique et la tête 14 en forme disque coaxial, le tronc 16 étant de plus petit diamètre que la tête 14, en variante selon toute autre forme géométrique appropriée.

Avantageusement, le tronc inférieur 16 constitue une partie de préhension ou poignée permettant de manipuler facilement le support 10.

Le support 10 comporte de préférence, au raccordement de l'extrémité supérieure du tronc inférieur 16 avec la face inférieure 19 de la tête 14, une zone de moindre résistance mécanique 20.

Comme visible sur la figure 2, le support 10 comporte avantageusement dans la zone 20 une amorce de rupture 22 réalisée par exemple sous la forme d'une entaille annulaire qui s'étend sur tout ou partie de la circonférence du tronc 16 de manière à faciliter la séparation de la tête supérieure 14 et du tronc inférieur 16.

Conformément à l'invention, le tronc inférieur 16 est séparable de la tête supérieure 14 de manière que la tête 14 puisse, après séparation, constituer ultérieurement un socle de présentation de l'animal cultivé.

Selon le premier mode de réalisation, la tête supérieure et le tronc inférieur 16 constitue un support 10 monobloc et la séparation de la tête 14 est une opération irréversible qui est effectuée lorsque le socle de présentation de l'animal cultivé est susceptible d'être commercialisé.

La tête supérieure 14 formant le socle de présentation est réalisée en un matériau analogue à du minéral, tel que de la pierre naturelle ou artificielle poreuse et légère, de manière à former un socle de présentation qui soit similaire au support de vie de l'animal dans son environnement naturel.

La tête 14 et/ou le tronc 16 sont par exemple réalisés par moulage à partir d'un mélange d'un ou plusieurs composants minéraux parmi le ciment, le sable, le carbonate de calcium, l'hydroxyde de calcium, la pouzzolane, la roche naturelle et la pierre ponce de manière à obtenir une pierre artificielle dont l'aspect soit similaire à de la pierre naturelle.

On notera que les formes cylindriques de révolution, le cas échéant légèrement tronconiques, respectivement de la tête 14 et du tronc 16 facilitent le démoulage.

Bien entendu de très nombreuses formes sont réalisables, notamment par moulage, et la face supérieure comme le pourtour de la tête 14 présentent par exemple un état de surface irrégulier d'aspect naturel.

Le tronc 16 est donc, selon le premier mode de réalisation, avantageusement réalisé par moulage en une seule pièce avec la tête 14 à partir d'un mélange analogue mais de densité et de composition différente de manière à présenter une plus faible résistance mécanique et à faciliter la séparation ultérieure du tronc et de la tête.

Avantageusement, la tête 14 comporte une pluralité de cavités 18 susceptibles de recevoir différentes boutures 8 d'animaux dont la culture peut donc être effectuée simultanément de manière à obtenir un socle de présentation présentant plusieurs animaux aquatiques, de préférence appartenant à des espèces différentes comme par exemple des coraux et/ou des éponges.

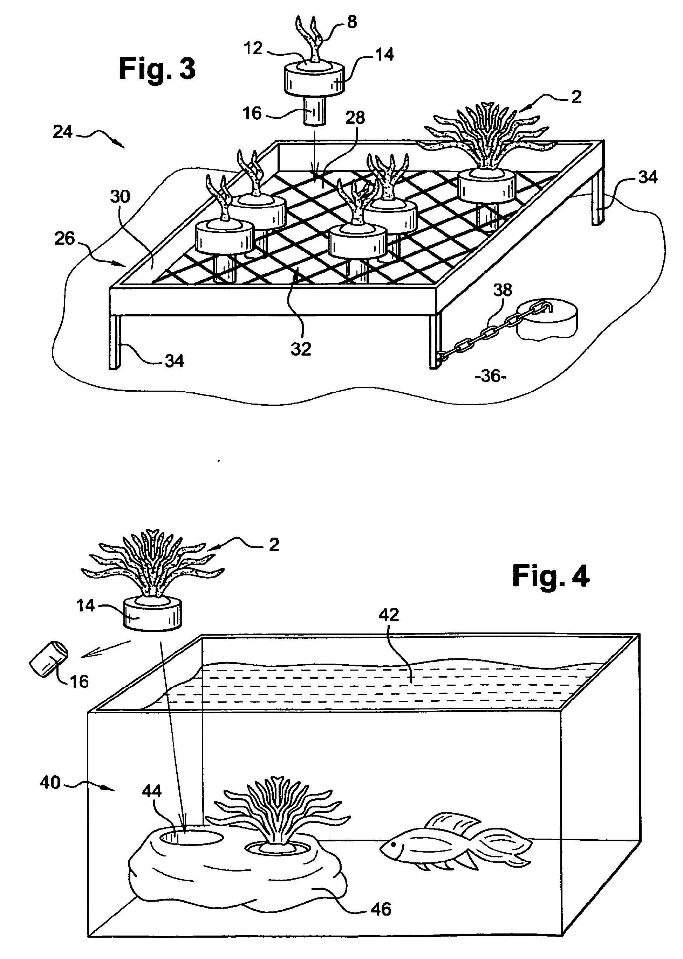

La figure 3 représente un exemple de réalisation d'installation d'aquaculture comportant une table de culture 24.

La table de culture 24 comporte un plateau 26 globalement horizontal qui comporte des logements 28 calibrés destinés à recevoir les troncs cylindriques 16 des supports 10 selon l'invention.

Le plateau horizontal 26 comprend un cadre 30 et un grillage 32 dont chaque maille constitue ainsi un logement 28 dans lequel le tronc inférieur 16 d'un support 10 est introduit axialement du haut vers le bas.

Un tel plateau horizontal 26 est donc simple à fabriquer et particulièrement économique du fait de l'utilisation de grillage 32 pour réaliser une structure comportant une pluralité de logement 28.

Le plateau horizontal 26 comporte ici des pieds 34 de manière à constituer la table de culture 24 qui est susceptible d'être fixée sur un fond 36, tel qu'un fond marin, par des moyens d'ancrage 38.

Les moyens d'ancrage 38 sont par exemple constitués par un bloc de béton solidaire du fond 36 et comportant sur sa face supérieure un anneau d'accrochage de l'extrémité d'une chaîne dont l'autre extrémité est fixée à un des pieds 34.

De tels moyens d'ancrage 38 permettent de garantir une position fixe de la table de culture 24 indépendamment des courants marins dans le cadre d'une installation en milieu naturel.

En variante, la table de culture 24 est disposée dans un bassin d'une l'installation reproduisant les conditions du milieu naturel nécessaires au développement des animaux aquatiques cultivés.

Avantageusement, les éléments de l'installation destinés à être immergés dans l'eau de mer sont réalisés dans des matériaux présentant une bonne résistance à la corrosion comme l'acier galvanisé ou tout autre matériau approprié.

Les pieds 34 et le plateau 26 de la table de culture 24 peuvent être solidaires, par exemple soudés au cadre 30, ou réalisés de manière à pouvoir être séparés du plateau, par exemple par des moyens de fixation amovibles.

Le plateau 26, ou une partie de ce dernier, peut ainsi constituer un plateau de transport susceptible d'être utilisé d'une part lors de la mise en place des animaux aquatiques dans l'installation en vue de leur culture et, d'autre part, à l'issue de la culture pour le transport des animaux cultivés.

En variante, on utilise un plateau distinct de celui de la table de culture 24 pour les opérations de transport des animaux de sorte que la table 24 de l'installation puisse rester à demeure sur le fond 36 du lieu choisi pour l'aquaculture.

On a représenté de gauche à droite sur la figure 3 des animaux aquatiques à différents stades de développement, c'est-à-dire de la bouture initiale 8 jusqu'à l'obtention d'un animal aquatique cultivé 2 analogue à l'animal « mère » illustré à la figure 1.

Pour les opérations de transport en vue de la commercialisation des animaux cultivés 2, on peut conserver le tronc 16 du support 10 solidaire de la tête 14 de manière à pouvoir introduire le tronc 16 de fixation et de maintien dans des logements complémentaires d'un plateau de manipulation et de transport ou d'un conteneur de transport prévu à cet effet.

En variante, le tronc 16 est séparé de la tête 14 à la fin de la culture de manière à permettre le conditionnement de l'ensemble constitué par l'animal 2 et son socle de présentation que forme la tête 14 du support 10.

Selon un exemple de conditionnement (non représenté), on attache le socle de présentation 14 à un support formant flotteur, tel qu'un support en polystyrène, de manière à conditionner l'animal 2 pour permettre son transport dans un emballage, tel qu'un sac plastique rempli d'eau.

Un tel emballage est usuellement rempli en partie d'eau dans laquelle l'animal 2 est immergé « la tête à l'envers », c'est-à-dire les branches 6 s'étendant vers le bas en direction opposée du socle 14 qui est solidaire du flotteur.

La figure 4 représente un aquarium 40 rempli d'eau 42 sur le fond duquel, après séparation du tronc 16, on dépose la tête 14 du support 10 formant un socle de présentation de l'animal aquatique 2.

L'animal 2 peut ainsi être posé directement sur la face inférieure de son socle de présentation, qui est constituée par la face inférieure horizontale de la tête supérieure 14 présentant un aspect naturel de pierre, dans l'aquarium 40 qui comporte généralement un fond sablonneux.

Comme visible sur la figure 4, le socle 14 peut avantageusement être reçu dans un trou 44 de forme complémentaire que comporte un rocher naturel ou artificiel 46 posé sur le fond de l'aquarium 40.

Le rocher 46 peut présenter plusieurs trous 44 permettant d'y introduire des socles de présentation conforme à l'invention qui portent différentes espèces d'animaux aquatiques de manière à reconstituer partiellement un récif similaire au milieu naturel.

Un rocher 46 de type artificiel peut être réalisé par moulage à partir d'un mélange analogue à celui utilisé pour le support 10 qui est léger et poreux et présente l'avantage de ne pas comporter de composant susceptible de réagir avec l'eau 42 de l'aquarium 40, notamment d'en modifier les paramètres physico-chimiques tels que l'indice pH.

L'aquarium 40 n'est qu'un exemple possible de d'application pour la commercialisation d'un socle de présentation 14 portant un animal cultivé 2 selon l'invention.

En variante les socles et les animaux cultivés peuvent être utilisés pour reconstituer des fonds coralliens endommagés et/ou pour créer des colonies souches en vue de développer une activité d'aquaculture selon l'invention.

En variante, la table de culture 24 de l'installation selon l'invention peut être utilisée pour la production de pierre artificielle d'ornementation, telle que le rocher 46, afin qu'une telle pierre puisse du fait de son immersion s'ensemencer de bactéries, d'algues ou autres micro-organismes présent dans l'eau de mer à l'état naturel.

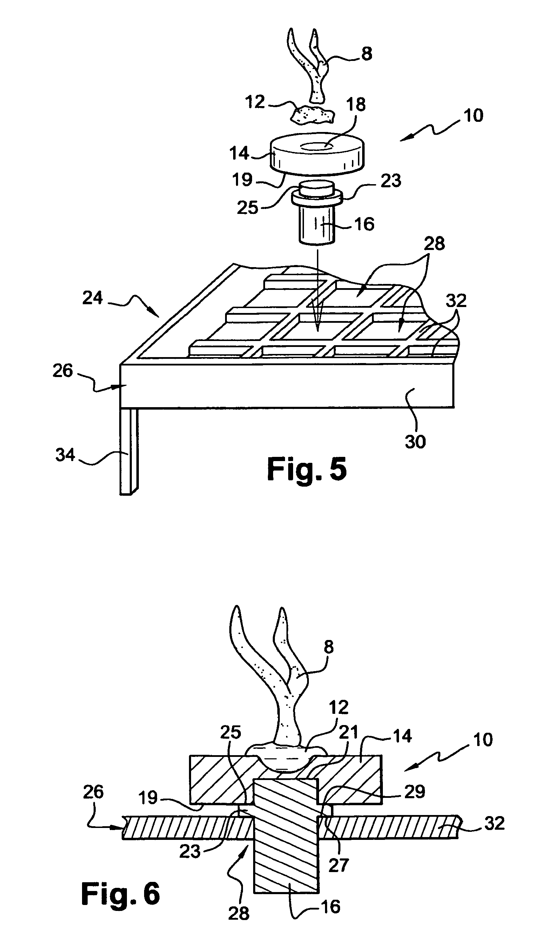

Les figures 5 et 6 illustrent un support 10 selon un deuxième mode de réalisation de l'invention qui va être décrit ci-après par comparaison avec le premier mode de réalisation.

Le support 10 est avantageusement utilisé pour l'aquaculture par bouturage d'animaux aquatiques 2 tels que décrit précédemment et illustré à la figure 1.

De manière analogue, le support 10 comporte donc une tête supérieure 14, destinée à recevoir au moins une bouture 8, et un tronc inférieur 16 permettant la fixation du support 10, notamment dans une installation de culture, en variante dans un conteneur de transport.

Selon le deuxième mode de réalisation, le support 10 comporte deux parties distinctes à savoir la tête supérieure 14 et le tronc inférieur 16 qui sont susceptibles d'être sans limitation du nombre d'opération soit assemblées ensemble, soit séparées grâce à des moyens de liaison intervenant entre la tête 14 et le tronc 16.

Ainsi, la tête 14 comporte dans sa face inférieure 19 un logement 21 destiné à recevoir par exemple au moins une partie du tronc inférieur 16, ici son extrémité supérieure.

Le tronc 16 est donc aisément séparable de la tête 14 de manière que cette dernière constitue ultérieurement un socle de présentation de l'animal cultivé 2.

Le tronc 16 est susceptible d'être rendu solidaire de la tête 14 par tout moyen de liaison approprié, notamment par coopération de formes.

De préférence, la liaison entre la tête 14 et le tronc 16 est réalisée par emmanchement direct de l'extrémité supérieure du tronc 16 dans le logement complémentaire 21 de la tête 14.

Un tel moyen de liaison est particulièrement simple et économique à réaliser et permet de lier ou de séparer aisément et rapidement les deux parties du support 10.

Ainsi, l'extrémité supérieure du tronc 16 pénètre dans le logement 21 de la tête jusqu'à ce que sa face supérieure vienne buter contre le fond du logement 21.

De préférence, le tronc inférieur 16 comporte une collerette 23 qui s'étend radialement vers l'extérieur et délimite avec la surface externe du tronc inférieur 16 une face supérieure de butée 25 qui est susceptible de coopérer, après assemblage du tronc 16 et de la tête 14, avec la face inférieure 19 de la tête 14.

La collerette 23 constitue alors avantageusement un moyen de contrôle permettant par un simple examen visuel de s'assurer que le tronc 16 est correctement emmanché dans la tête 14.

Bien entendu, la face inférieure 19 de la tête 14 constitue comme précédemment la face inférieure ultérieure du socle de présentation présentant un aspect naturel de pierre qui est par exemple susceptible d'être reçu dans le trou 44 d'un rocher naturel ou artificiel 46 tel que celui illustré à la figure 4 ou en variante posé sur le fond sablonneux d'un aquarium 40.

Avantageusement, le trou 44 du rocher 46 comporte un pion, analogue au tronc 16, qui s'étend verticalement vers le haut à partir de son fond et qui est susceptible de pénétrer dans le logement 21 de la tête supérieure 14 de manière à permettre par exemple l'immobilisation et/ou le centrage de la tête 14 dans le trou 44.

En variante, le logement 21 est un orifice qui est aussi ouvert sur la face supérieure de la tête 14 de sorte que le tronc inférieur 16 comportant avantageusement une collerette 23 formant une butée, traverse la tête 14.

Comme on peut le voir sur la figure 6, le tronc inférieur 16 est susceptible d'être reçu dans le logement complémentaire 28 du plateau 26 d'une table de culture 24 appartenant à une installation d'aquaculture.

Lorsque le plateau 26 est du type qui comporte comme précédemment du grillage 32 ou des traverses constituant le maillage délimitant les logements 28 pour les supports 10, la face inférieure 27 de la collerette 23 est alors avantageusement en appui axial sur la face supérieure 29 de manière à immobiliser axialement le support 10 dans le plateau 26.

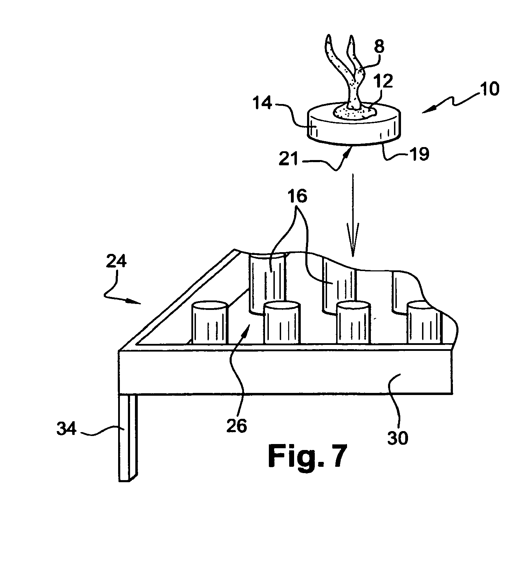

La figure 7 est une vue schématique partielle en perspective analogue à la figure 5 qui illustre une variante du deuxième exemple de réalisation.

Selon cette variante, le tronc inférieur 16 du support 10 est solidaire du plateau 26 de manière à constituer un pieu s'étendant verticalement vers le haut sur lequel est rapportée la tête supérieure 14, par exemple par emmanchement.

De préférence, les troncs inférieurs 16 formant pieux qui sont solidaires de la face supérieure d'une plaque formant le plateau horizontal 26 que délimite le cadre 30, ne comportent ici pas de collerette 23 de sorte que l'extrémité supérieure du tronc 16 pénètre dans le logement 21 de la face inférieure 19 de la tête 14 jusqu'à ce que sa face supérieure vienne buter contre le fond supérieur du logement 21.

En variante, lorsque le plateau 26 est du type de celui décrit et représenté à la figure 5, les troncs inférieurs 16 formant pieux sont solidaires des traverses 32 et sont avantageusement agencés à l'intersection de deux traverses 32.

Bien entendu, lorsque le support 10 est réalisé selon le premier mode de réalisation, la face inférieure 19 de la tête supérieure 14 peut comporter, après séparation du tronc inférieur 16, un plot (non représenté) qui correspond à la partie résiduelle du tronc 16 comprise axialement entre la zone 20 de l'amorce de rupture 22 et la face inférieure 19 constituant la face inférieure ultérieure du socle de présentation.

Le plot s'étend donc axialement vers le bas de manière proéminente par rapport à la face inférieure 19 de sorte qu'il est susceptible de pénétrer dans un logement complémentaire formé dans le fond du trou 44 du rocher 46 recevant le socle de présentation de l'animal aquatique 2 issue de la bouture 8.

La coopération entre le plot et le logement permet par exemple l'immobilisation et/ou le centrage de la tête 14 dans le trou 44.

Lorsque la tête 14 du support 10 formant le socle de présentation est déposée sur le fond sablonneux d'un aquarium 40, la présence d'un tel plot est sans aucune incidence. Toutefois si l'on souhaite obtenir une face inférieure de socle globalement plane et horizontale il est possible de rectifier la face inférieure 19 de manière à supprimer le plot, par exemple au moyen d'une meule.

Bien entendu, dans le second mode de réalisation la liaison par emmanchement intervenant entre la tête supérieure 14 et le tronc inférieur 16 est donnée uniquement à titre exemple et de manière non limitative, la liaison pouvant aussi être réalisée par exemple par vissage ou par encliquetage.

Ainsi, lorsque la tête 14 et le tronc 16 sont liés par coopération de formes, la liaison peut s'effectuer directement entre ces deux parties du support 10 ou indirectement avec interposition d'éléments de liaison complémentaires, tels que des inserts, qui sont avantageusement solidaires de la tête 14 ou du tronc 16.

Les formes complémentaires pour un assemblage démontable peuvent permettre un emboîtement élastique, par exemple au moyen de pinces ou de "clips" élastiques.

Selon une autre variante non représentée, la tête supérieure 14 et le tronc inférieur 16 sont susceptibles d'être assemblés de manière démontable par vissage.

Un élément taraudé, tel qu'un boulon ou un bouchon à vis, formant la partie femelle est par exemple inséré dans le logement 21 de la face inférieure 19 de la tête 14 et de préférence rendu solidaire de cette dernière par exemple par collage, en variante lors de sa réalisation par moulage comme décrit précédemment.

Le tronc 16 est par exemple constitué par une tige filetée ou la partie supérieure d'une bouteille comportant le goulot, et il comporte à son extrémité supérieure un filetage complémentaire destiné à coopérer avec l'élément taraudé.

De préférence, les moyens de liaison par vissage sont réalisés dans des matériaux présentant une bonne résistance à la corrosion comme l'acier galvanisé ou tout autre matériau approprié tel que du "plastique".

Bien entendu, lorsque le tronc inférieur 16 est susceptible de constituer une partie de préhension il est alors de préférence réalisé selon une forme cylindrique de révolution du type de celle illustrée dans les figures.

En variante, le tronc inférieur 16 peut être réalisé selon d'autres formes géométriques, notamment de forme tronconique et en particulier lorsque le tronc 16 est solidaire du plateau 26.

## Revendications

1. Support (10) pour l'aquaculture par bouturage d'animaux aquatiques (2), notamment destinés aux aquariums tels que des cnidaires ou des spongiaires, **caractérisé en ce qu'**il comporte une tête supérieure (14), destinée à recevoir au moins une bouture (8), et un tronc inférieur (16) permettant la fixation du support (10), notamment dans une installation de culture, en variante dans un conteneur de transport, et **en ce que** le tronc (16) est séparable de la tête (14) pour que cette dernière constitue ultérieurement un socle de présentation de l'animal cultivé.

2. Support selon la revendication 1, **caractérisé en ce qu'**au moins la tête supérieure (14) formant un socle de présentation est réalisée en un matériau analogue à du minéral.

3. Support selon l'une des revendications 1 ou 2, **caractérisé en ce que** la face supérieure de la tête (14) comporte au moins une cavité (18) destinée à recevoir au moins une bouture (8) de l'animal (2).

4. Support selon la revendication 3, **caractérisé en ce que** la bouture (8) est fixée dans la cavité (18) de la tête (14) par des moyens de fixation (12), par collage notamment par de la colle époxy, du cyanoacrylate ou du ciment à prise rapide.

5. Support selon l'une quelconque des revendications précédentes, **caractérisé en ce qu'**au moins la tête (14) est réalisée par moulage à partir d'un mélange d'un ou plusieurs composants minéraux parmi le ciment, le sable, le carbonate de calcium, l'hydroxyde de calcium, la pouzzolane, la roche naturelle et la pierre ponce.

6. Support selon l'une quelconque des revendications précédentes, **caractérisé en ce qu'**il comporte des moyens de liaison intervenant entre la tête supérieure (14) et le tronc inférieur (16) pour permettre leur assemblage.

7. Support selon l'une quelconque des revendications précédentes, **caractérisé en ce que** la tête (14) comporte dans sa face inférieure (19) un logement (21), notamment destiné à recevoir le tronc inférieur (16).

8. Support selon la revendication 7, **caractérisé en ce que** le tronc inférieur (16) comporte une collerette radiale (23) comportant une face supérieure de butée (25) qui coopère après assemblage avec la face inférieure (19) de la tête (14).

9. Support selon l'une quelconque des revendications précédentes, **caractérisé en ce que** la tête (14) a globalement une forme de disque dont la face inférieure horizontale à partir de laquelle le tronc (16) s'étend centralement vers le bas, constitue la face inférieure ultérieure du socle.

10. Support selon l'une quelconque des revendications 1 à 6 prise en combinaison avec la revendication 9, **caractérisé en ce qu'**il comporte une zone (20) de moindre résistance mécanique au raccordement de l'extrémité supérieure du tronc (16) avec la tête (14).

11. Support selon la revendication 10, **caractérisé en ce qu'**il comporte une amorce de rupture (22) au raccordement de l'extrémité supérieure du tronc (16) avec la tête (14).

12. Support selon la revendication 5 prise en combinaison avec l'une des revendications 10 ou 11, **caractérisé en ce que** le tronc (16) est réalisé par moulage en une seule pièce à partir d'un mélange analogue, mais de densité et de composition différentes, de manière à faciliter la séparation ultérieure du tronc (16) et de la tête (14).

13. Installation d'aquaculture par bouturage d'animaux aquatiques, notamment destinés aux aquariums tels que des cnidaires ou des spongiaires, du type comportant au moins un support (10) selon l'une quelconque des revendications précédentes, **caractérisé en ce qu'**elle comporte au moins un plateau (26) globalement horizontal qui comporte au moins un logement (28) destiné à recevoir un tronc (16) d'un support (10).

14. Installation selon la revendication 13, **caractérisé en ce que** le plateau horizontal (26) comprend un cadre (30) et un grillage (32) dont chaque maille constitue un logement (28) pour un tronc (16) d'un support (10).

15. Installation selon la revendication 13, **caractérisé en ce que** le tronc inférieur (16) du support (10) est solidaire du plateau horizontal (26).

## Claims

1. Support (10) for the aquaculture, by propagation, of aquatic animals (2), particularly for aquariums, such as cnidarians or poriferans, **characterized in that** it comprises an upper head (14), for receiving at least one cutting (8), and a lower trunk (16 for fastening the support (10), particularly in a culture installation, or alternatively in a transport container, and **in that** the trunk (16) can be separated from the head (14) so that the later then constitutes a base for displaying the culture animal.

2. Support according to claim 1, **characterized in that** at least the upper head (14) forming a display base is made of a material similar to mineral.

3. Support according to one of claims 1 and 2, **characterized in that** the top face of the head (14) comprises at least one cavity (18) for receiving at least one cutting (8) of the animal (2).

4. Support according to claim 3, **characterized in that** the cutting (8) is fastened in the cavity (18) of the head (14) by fastening means (12), by adhesive bonding, in particular by an epoxy adhesive, a cyanoacrylate or quick-setting cement.

5. Support according to any one of the preceding claims, **characterized in that** at least the head (14) is made by moulding a mixture of one or more mineral components selected from cement, sand, calcium carbonate, calcium hydroxide, pozzolana, natural rock and pumice stone.

6. Support according to any one of the preceding claims, **characterized in that** it comprises connecting means between the upper head (14) and lower trunk (16) to allow their assembly.

7. Support according to any one of the preceding claims, **characterized in that**, on its underside (19), the head (14) comprises a housing (21), in particular for receiving the lower trunk.

8. Support according to any one of the preceding claims, **characterized in that** the lower trunk (16) comprises a radial flange (23), comprising an upper abutment surface (25) that collaborates after assembly with the underside (19) of the head (14).

9. Support according to any one of the preceding claims, **characterized in that** the head (14) has the overall shape of a disc whose horizontal underside, from which the trunk (16) extends centrally downwards, subsequently constitutes the underside of the base.

10. Support according to any one of claims 1 to 6 in combination with claim 9, **characterized in that** the support comprises a zone (20) of lower mechanical strength at the join between the upper end of the trunk (16) and the head (14).

11. Support according to claim 10, **characterized in that** it comprises a break initiator (22) at the join between the upper end of the trunk (16) and the head (14).

12. Support according to claim 5 in combination with either of claims 10 and 11, **characterized in that** the trunk (16) is made by moulding as a single piece using a mixture that is siilar but of different density and composition, so as to facilitate the subsequent separation of the trunk (16) from the head (14).

13. Installation for the aquaculture, by propagation, of aquatic animals, particularly for aquariums, such as cnidarians or poriferans, of the type comprising at least one support (10) according to any one of the preceding claims, **characterized in that** it comprises at least one generally horizontal tray (26) that has at least one housing (28) for receiving a trunk (16) of a support (10).

14. Installation according to claim 13, **characterized in that** the lower trunk (16) of the support (10) is integral with the horizontal tray (26).

15. Installation according to claim 13, **characterized in that** the lower trunk (16) of the support (10) is integral with the horizontal tray (26).

## Patentansprüche

1. Aquakulturzuchteinheit (10, 2), insbesondere für Aquarien, wie zum Beispiel Nesseltiere oder Spongien, **dadurch gekennzeichnet, dass** sie ein oberes Ende oder einen Kopf (14) aufweist, um mindestens einen Steckling oder Ableger (8), aufzunehmen, und einen unteren Schaft (16) für die Befestigung der Einheit (10), insbesondere in einer Aquakulturanlage, alternativ in einem Transportbehälter, und dass der Schaft von dem oberen Ende oder Kopf (14) abgetrennt werden kann, damit letzteres später einen Präsentationssockel für die Aquakultur darstellt.

2. Einheit nach Anspruch 1, **dadurch gekennzeichnet, dass** mindestens das obere Ende oder der Kopf (14), das einen Präsentationssockel bildet, aus einem Material hergestellt ist, das einem Mineralstoff ähnelt.

3. Einheit nach einem der Ansprüche 1 oder 2, **dadurch gekennzeichnet, dass** die Oberseite des oberen Endes oder des Kopfes (14) mindestens einen Hohlraum (18) aufweist, um mindestens einen Steckling oder Ableger (8) des Tieres (2) aufzunehmen.

4. Einheit nach Anspruch 3, **dadurch gekennzeichnet, dass** der Steckling oder Ableger (8) in dem Hohlraum (18) des oberen Endes oder Kopfes (14) mit Hilfe von Befestigungsmitteln (12), durch Kleben, insbesondere mit Epoxidkleber, Cyanoacrylat oder schnell abbindendem Zement, befestigt ist.

5. Einheit nach einem der vorhergehenden Ansprüche, **dadurch gekennzeichnet, dass** mindestens das obere Ende oder der Kopf (14) durch Formen aus einer Mischung hergestellt ist, die aus einem oder mehreren mineralischen Bestandteilen, darunter Zement, Sand, Kalziumkarbonat, Kalziumhydroxid, Puzzolan, Naturgestein und Bimsstein besteht.

6. Einheit nach einem der vorhergehenden Ansprüche, **dadurch gekennzeichnet, dass** sie Verbindungsmittel besitzt, die zwischen dem oberen Ende oder dem Kopf (14) und dem unteren Schaft (16) eingreifen, um ihre Montage zu ermöglichen.

7. Einheit nach einem der vorhergehenden Ansprüche, **dadurch gekennzeichnet, dass** das oberen Ende oder der Kopf (14) in seiner Unterseite (19) eine Aufnahme (21) besitzt, insbesondere um den unteren Schaft (16) aufzunehmen.

8. Einheit nach Anspruch 7, **dadurch gekennzeichnet, dass** der untere Schaft (16) einen radialen Bund (23) mit einer Oberseite mit Anschlagfläche (25) aufweist, die nach der Montage mit der Unterseite (19) des oberen Endes oder Kopfes (14) zusammenwirkt.

9. Einheit nach einem der vorhergehenden Ansprüche, **dadurch gekennzeichnet, dass** das obere Ende oder der Kopf (14) grundsätzlich die Form einer Scheibe besitzt, deren horizontale Unterseite, von der aus der untere Schaft (16) zentral nach unten verläuft, die spätere Unterseite des Sockels bildet.

10. Einheit nach einem der Ansprüche 1 bis 6 in Verbindung mit Anspruch 9, **dadurch gekennzeichnet, dass** sie eine Zone (20) des geringsten mechanischen Widerstandes gegen die Verbindung des oberen Endes des Schaftes (16) mit dem oberen Ende oder dem Kopf (14) besitzt.

11. Einheit nach Anspruch 10, **dadurch gekennzeichnet, dass** sie an der Verbindung des oberen Endes des Schaftes (16) mit dem Kopf (14) einen Anbruch (22) aufweist.

12. Einheit nach Anspruch 5 in Verbindung mit einem der Ansprüche 10 oder 11, **dadurch gekennzeichnet, dass** der Schaft (16) durch Formen aus einem Stück aus einer analogen Mischung, jedoch mit anderer Dichte und Zusammensetzung, hergestellt ist, um die spätere Abtrennung des Schaftes (16) von dem Kopf (14) zu erleichtern.

13. Aquakulturzuchtanlage, insbesondere für Aquarien, wie beispielsweise Nesseltiere oder Spongien, mit mindestens einer Einheit (10) nach einem der vorhergehenden Ansprüche, **dadurch gekennzeichnet, dass** sie mindestens eine grundsätzlich horizontale Platte (26) aufweist, die mindestens eine Aufnahme (28) besitzt, um einen Schaft (16) einer Einheit (10) aufzunehmen.

14. Anlage nach Anspruch 13, **dadurch gekennzeichnet, dass** die horizontale Platte (26) einen Rahmen (30) und ein Gitter (32) aufweist, wobei jede Gitterzelle bzw. Masche eine Aufnahme (28) für einen Schaft (16) einer Einheit (10) bildet.

15. Anlage nach Anspruch 12, **dadurch gekennzeichnet, dass** der untere Schaft (16) der Einheit (10) einstückig mit der horizontalen Platte (26) ausgebildet ist.
